# EUROPÄISCHE PATENTSCHRIFT

(11) **EP 0 988 448 B1**
(45) Veröffentlichungstag und Bekanntmachung des Hinweises auf die Patenterteilung: **26.11.2003**
(21) Anmeldenummer: 98956787.0
(22) Anmeldetag: 23.09.1998
(51) Int. Cl.: F02M 61/14, F02M 69/46, F02M 61/16

(54) **VERFAHREN ZUM MONTIEREN VON BRENNSTOFFEINSPRITZVENTILEN UND EINER BRENNSTOFF-VERTEILERLEITUNG AN EINEM ZYLINDERKOPF UND MONTAGEVORRICHTUNG DAFÜR**
METHOD FOR MOUNTING FUEL INJECTION VALVES AND FUEL DISTRIBUTOR RAIL ON AN ENGINE CYLINDER HEAD AND CORRESPONDING MOUNTING DEVICE
METHODE ET DISPOSITIF DE MONTAGE DES SOUPAPES D'INJECTION ET D'UN COLLECTEUR DE DISTRIBUTION DE COMBUSTIBLE SUR LA CULASSE

(30) Priorität: 17.12.1997 DE 19756102
(43) Veröffentlichungstag der Anmeldung: 29.03.2000
(73) Patentinhaber: ROBERT BOSCH GMBH, 70442 Stuttgart (DE)
(72) Erfinder: GMELIN, Karl, D-74223 Flein (DE)
(86) Internationale Anmeldenummer: DE9802817
(87) Internationale Veröffentlichungsnummer: WO99031381

(56) Entgegenhaltungen:
- DE-A- 2 208 646
- US-A- 5 074 269
- US-A- 5 123 399
- PATENT ABSTRACTS OF JAPAN vol. 097, no. 003, 31. März 1997 & JP 08 312503 A (MITSUBISHI MOTORS CORP;MITSUBISHI AUTOMOB ENG CO LTD), 26. November 1996 in der Anmeldung erwähnt

## Beschreibung

### Stand der Technik

Die Erfindung betrifft eine Montagevorrichtung zum Montieren von Brennstoffeinspritzventilen und einer Brennstoff-Verteilerleitung an einem Zylinderkopf einer Brennkraftmaschine sowie ein Verfahren zum Montieren der Brennstoffeinspritzventile und der Brennstoff-Verteilerleitung.

Es ist zum Beispiel aus der JP-OS 08-312503 bekannt, an dem Zylinderkopf einer Brennkraftmaschine Aufnahmebohrungen für jeweils ein Brennstoffeinspritzventil für jeden Brennraum der Brennkraftmaschine vorzusehen, in welche jeweils ein Abspritzabschnitt eines zugeordneten Brennstoffeinspritzventiles zum direkten Einspritzen von Brennstoff in den jeweiligen Brennraum einsetzbar ist. Das in die Aufnahmebohrung des Zylinderkopfs eingesetzte Brennstoffeinspritzventil wird mittels einer als Spannpratze ausgebildeten Niederhaltevorrichtung gegen den in dem Brennraum herrschenden relativ hohen Verbrennungsdruck niedergehalten. Für die Zuleitung des Brennstoffs an einen in jedem Brennstoffeinspritzventil vorgesehenen Zulaufabschnitt mit einer Brennstoff-Einlaßöffnung ist bei der JP-OS 08-312503 eine Brennstoff-Verteilerleitung vorgesehen, die die Brennstoffeinspritzventile mit einer Brennstoffpumpe verbindet. Die Brennstoff-Verteilerleitung weist für jedes Brennstoffeinspritzventil eine Brennstoff-Auslaßöffnung auf. Um die notwendige Dichtung zu erreichen, ist jeweils ein Dichtungselement in Form eines O-Ringes vorgesehen.

Für diese bekannte Montageart ist jedoch nachteilig, daß die Brennstoffeinspritzventile einzeln an dem Zylinderkopf montiert werden müssen, was einen erheblichen Montageaufwand mit mehreren Arbeitsgängen erfordert. Eine Vorprüfung der Brennstoffeinspritzanlage, zum Beispiel auf Dichtheit, ist nicht möglich. Eine vollautomatische Fertigung wird durch die Vielzahl der Arbeitsgänge erschwert.

Aus der US 5,074,269 A ist es bereits bekannt, Brennstoffeinspritzventile mittels Befestigungsklammern an einer Brennstoffverteilerleitung zu befestigen. Dabei werden die Brennstoffeinspritzventile, die der sogenannten Saugrohreinspritzung zur Gemischbildung im Ansaugkanal der Brennkraftmaschine vor dem jeweiligen Einlassventil des Brennraums dienen, mit ihren abspritzseitigen Enden in Ventilaufnahmen des Saugrohres eingesetzt. Die zulaufseitigen Enden der Brennstoffeinspritzventile werden in Aufnahmeöffnungen von Verbindungsstutzen der Brennstoffverteilerleitung eingeschoben. Dort wird dann jedes einzelne Brennstoffeinspritzventil separat mit einer Befestigungsklammer an der Brennstoffverteilerleitung verliersicher fixiert. Jedes Brennstoffeinspritzventil muss einzeln der Brennstoffverteilerleitung zugeführt und an ihr montiert werden.

### Vorteile der Erfindung

Das erfindungsgemäße Verfahren mit den Merkmalen des Anspruches 1 hat demgegenüber den Vorteil, daß sämtliche Brennstoffeinspritzventile zusammen mit der Brennstoff-Verteilerleitung an dem allen Brennstoffeinspritzventilen gemeinsamen Montagebügel vormontiert werden können. Die die Brennstoff-Verteilerleitung und die Brennstoffeinspritzventile umfassende Brennstoffeinspritzanlage kann daher bereits beim Hersteller der Brennstoffeinspritzanlage als vollständiges Modul vormontiert werden. Das vormontierte Modul kann dann im Werk des Herstellers der Brennkraftmaschine ohne größeren Montageaufwand an der Brennkraftmaschine, zum Beispiel durch eine vollautomatisch arbeitende Fertigungsanlage, rasch montiert werden. Dazu sind lediglich die Brennstoffeinspritzventile in die an dem Zylinderkopf der Brennkraftmaschine vorzusehenden Aufnahmebohrungen einzuführen und die Brennstoff-Verteilerleitung mit dem Zylinderkopf, zum Beispiel mittels Verschrauben, zu verbinden. Dadurch werden die Federelemente so weit komprimiert bzw. verspannt, daß der Montagebügel lösbar und entfernbar ist. Der Montagebügel ist bei der Vormontage eines neuen Moduls, bestehend aus Brennstoff-Verteilerleitung und Brennstoffeinspritzventilen, wieder verwendbar.

Ein weiterer Vorteil besteht darin, daß die Brennstoffeinspritzanlage insbesondere im Verbindungsbereich zwischen den Brennstoffeinspritzventilen und der Brennstoff-Verteilerleitung bereits im Werk des Herstellers der Brennstoffeinspritzanlage auf einwandfreie Funktion, insbesondere auf einwandfreie Dichtheit, vorgeprüft werden kann. Durch diese Vorprüfung wird sichergestellt, daß dem Hersteller der Brennkraftmaschine nur einwandfrei arbeitende Brennstoffeinspritzanlagen geliefert werden und somit die Zuverlässigkeit der Brennstoffeinspritzanlagen insgesamt verbessert wird.

Durch die in den Unteransprüchen aufgeführten Maßnahmen sind vorteilhafte Weiterbildungen und Verbesserungen des in dem Anspruch 1 angegebenen Verfahrens und der in dem Anspruch 6 angegebenen Montagevorrichtung möglich.

Zwischen den Brennstoff-Auslaßöffnungen der Brennstoff-Verteilerleitungen und den Brennstoff-Einlaßöffnungen der Brennstoffeinspritzventile können vorteilhaft Zwischenhülsen angeordnet sein, die mit der Brennstoff-Verteilerleitung und den Brennstoffeinspritzventilen dichtend und in vorgegebenen Grenzen flexibel verbindbar sind. Dadurch können geringfügige Abweichungen der Position der Brennstoff-Einlaßöffnungen und der Aufnahmebohrungen an dem Zylinderkopf für das zugeordnete Brennstoffeinspritzventil durch die Zwischenhülsen ausgeglichen werden. An die Fertigungstoleranzen der Positionen der Brennstoff-Auslaßöffnungen der Brennstoff-Verteilerleitungen und der Positionen der Aufnahmeöffnungen an dem Zylinderkopf sind daher geringere Anforderungen zu stellen, so daß Fertigungskosten eingespart werden können. Die Federelemente können dabei als Spiralfedern die Zwischenhülse umgeben, so daß insgesamt eine äußerst kompakte Bauform entsteht. Ferner können die Zwischenhülsen in besonders vorteilhafter Weise durch Sicherungselemente an der Brennstoff-Verteilerleitung fixiert sein. Mittels der Sicherungselemente können die Zwischenhülsen an der Brennstoff-Verteilerleitung bereits vor dem Einsetzen der Federelemente und vor dem Zusammenfügen der Brennstoffeinspritzventile, der Brennstoff-Verteilerleitung und des Montagebügels vormontiert werden. Dadurch wird die Handhabbarkeit und Montagefreundlichkeit weiter verbessert. Die Sicherungselemente können in einfacher und wirkungsvoller Weise über Rastverbindungen mit der Brennstoff-Verteilerleitung oder auch alternativ mit den Brennstoffeinspritzventilen verbunden werden.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen teilweisen Schnitt durch eine Brennstoff-Verteilerleitung, eine Zwischenhülse und ein Brennstoffeinspritzventil, das an einem Zylinderkopf einer Brennkraftmaschine montiert ist; und
- Fig. 2: eine Seitenansicht der in Fig. 1 dargestellten Brennstoff-Verteilerleitung, des Zwischenstücks und des Brennstoffeinspritzventils nach der Vormontage an einem Montagebügel.

### Beschreibung des Ausführungsbeispiels

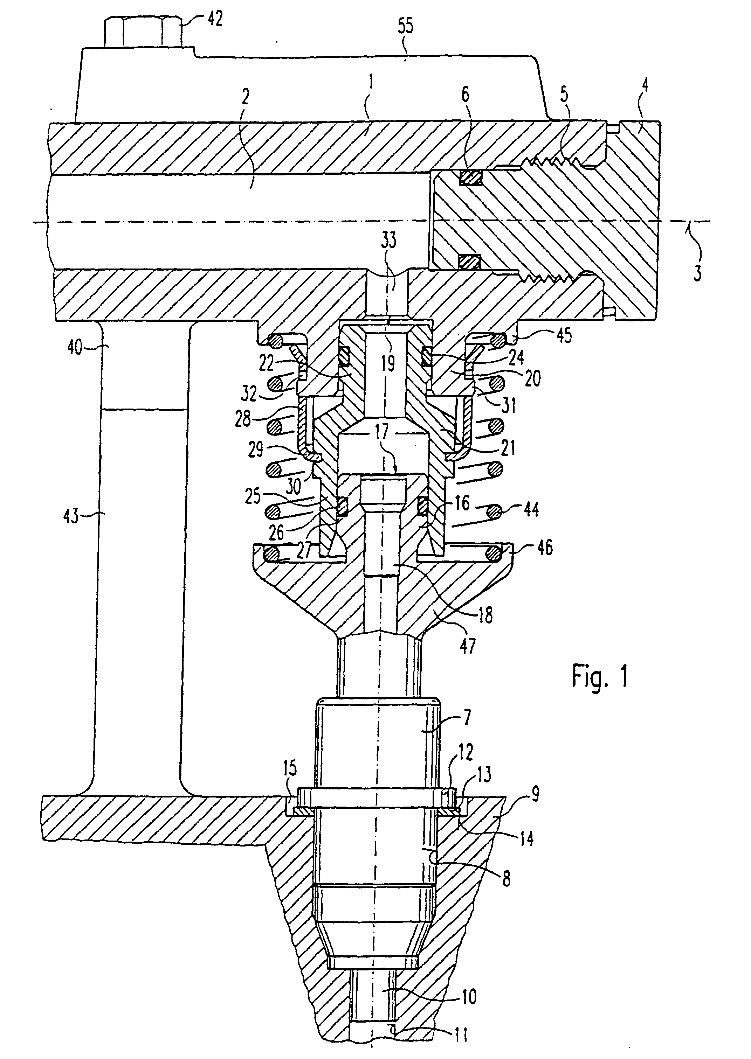

Fig. 1 zeigt in einer teilweise geschnittenen Darstellung eine Brennstoff-Verteilerleitung 1, in weicher eine sich entlang einer Längsachse 3 erstreckende Längsbohrung 2 ausgebildet ist. Die Längsbohrung 2 ist an dem aus Fig. 1 zu ersehenden Ende der Brennstoff-Verteilerleitung 1 durch ein Verschlußelement 4 abgeschlossen, das in die Längsbohrung 2 eingesetzt, vorzugsweise mittels eines Gewindes 5 eingeschraubt ist. Zur Abdichtung der Brennstoff-Verteilerleitung 1 weist das Verschlußelement 4 ein Dichtungselement 6, vorzugsweise in Form eines O-Rings auf.

Aus Fig. 1 ist ferner ein nur teilweise geschnitten dargestelltes Brennstoffeinspritzventil 7 zu erkennen, das in eine vorzugsweise als Stufenbohrung ausgebildete Aufnahmebohrung 8 des Zylinderkopfes 9 eingesetzt ist. Dabei ragt ein Abspritzabschnitt 10 in den in einen Brennraum einer Brennkraftmaschine ausmündenden Endabschnitt 11 der Aufnahmebohrung 8. An dem Abspritzabschnitt 10 des Brennstoffeinspritzventiles 7 ist in bekannter Weise zumindest eine Abspritzöffnung ausgebildet, um den Brennstoff direkt in den zugeordneten Brennraum der Brennkraftmaschine einzuspritzen. Das Brennstoffeinspritzventil 7 weist ferner einen Kragen 12 auf, der im Ausgangsbeispiel über einen Auflagering 13 auf der Bodenfläche 14 einer Erweiterung 15 der Aufnahmebohrung 8 aufliegt.

An einem Zulaufabschnitt 16 weist das Brennstoffeinspritzventil 7 eine Brennstoff-Einlaßöffnung 17 für eine Brennstoffleitung 18 im Inneren des Brennstoffeinspritzventiles 7 auf. Jedem Brennstoffeinspritzventil 7 ist an der Brennstoff-Verteilerleitung 1 eine Brennstoff-Auslaßöffnung 19 zugeordnet. Die Brennstoff-Auslaßöffnung 19 der Brennstoff-Verteilerleitung 1 ist von einem Verbindungsstutzen 20 umgeben. Im in Fig. 1 dargestellten Ausführungsbeispiel befindet sich zwischen der Brennstoff-Auslaßöffnung 19 der Brennstoff-Verteilerleitung 1 und der Brennstoff-Einlaßöffnung 17 eines jeden Brennstoffeinspritzventiles 7 jeweils eine Zwischenhülse 21. Alternativ ist es jedoch im Rahmen der vorliegenden Erfindung auch möglich, den Zulaufabschnitt 16 des Brennstoffeinspritzventils 7 unmittelbar in den Verbindungsstutzen 20 der Brennstoff-Verteilerleitung 1 einzuführen, so daß die Brennstoff-Einlaßöffnung 17 des Brennstoffeinspritzventiles 7 sich unmittelbar an die Brennstoff-Auslaßöffnung 19 der Brennstoff-Verteilerleitung 1 anschließt.

Im in Fig. 1 dargestellten Ausführungsbeispiel ist jedoch für jedes Brennstoffeinspritzventil 7 jeweils eine Zwischenhülse 21 vorgesehen, die innerhalb gewisser Grenzen eine flexible Verbindung der Brennstoff-Auslaßöffnung 19 der Brennstoff-Verteilerleitung 1 mit der Brennstoff-Einlaßöffnung 17 des Brennstoffeinspritzventiles 7 erlaubt. Dadurch können durch Fertigungs- und Montagetoleranzen bedingte Positionsabweichungen der an der Brennstoff-Verteilerleitung 1 ausgebildeten Brennstoff-Auslaßöffnungen 19 bezüglich der Positionen der an dem Zylinderkopf 9 ausgebildeten Aufnahmeöffnungen 8 ausgeglichen werden, so daß einerseits die Montagefreundlichkeit verbessert wird und andererseits an die Fertigungstoleranzen zur Positionierung der Brennstoff-Auslaßöffnungen 19 bzw. der Aufnahmebohrungen 8 geringere Anforderungen zu stellen sind. Die Verbindungsstutzen 20 sind im dargestellten Ausführungsbeispiel so ausgebildet, daß sie einen Zulaufabschnitt 22 der Zwischenhülse 21 tassenartig umschließen. Zur Dichtung ist ein in eine Nut eingesetztes Dichtungselement 24, vorzugsweise in Form eines O-Rings, vorgesehen. Stromabwärts des Zulaufabschnittes 22 weist die Zwischenhülse 21 eine Erweiterung 25 auf, welche den Zulaufabschnitt 16 des Brennstoffeinspritzventiles 7 ebenfalls tassenartig umschließt. Zur Dichtung ist auch hier ein Dichtungselement 26, vorzugsweise in Form eines O-Rings, welches in eine Nut 27 eingesetzt ist, vorgesehen.

Zur Vormontage der Zwischenhülse 21 ist im dargestellten Ausführungsbeispiel ein Sicherungselement 28 vorgesehen, welches den Verbindungsstutzen 20 und den zulaufseitigen Bereich der Verbindungshülse 21 an drei Seiten umschließt. Das Sicherungselement 28 ist an einem der Brennstoff-Verteilerleitung 1 abgewandten Ende 29 in eine Nut 30 der Zwischenhülse 21 eingesetzt. Der Verbindungsstutzen 20 weist vorzugsweise an zwei gegenüberliegenden Seiten jeweils eine Rastnase 31 auf, die in einer Ausnehmung 32 des Sicherungselementes 28 rastend einsetzbar ist. Auf diese Weise können die Zwischenhülsen 21 an der Brennstoff-Verteilerleitung 1 vormontiert werden, bevor die Brennstoffeinspritzventile 7 und die noch zu beschreibende erfindungsgemäße Montagevorrichtung montiert werden.

Die Brennstoff-Auslaßöffnung 19 ist über einen Verbindungskanal 33 mit der Längsbohrung 2 der Brennstoff-Verteilerleitung 1 verbunden. Entlang der Längsachse 3 der Brennstoff-Verteilerleitung 1 sind versetzt zueinander mehrere, zum Beispiel vier, Brennstoffeinspritzventile 7 angeordnet und jeweils über eine Zwischenhülse 21 und eine dem Brennstoffeinspritzventil 7 zugeordnete Brennstoff-Auslaßöffnung 19 sowie jeweils einen Verbindungskanal 33 mit der Längsbohrung 2 der Brennstoff-Verteilerleitung 1 verbunden. Die Brennstoff-Verteilerleitung 1 dient dabei der Zuleitung von Brennstoff an sämtliche Brennstoffeinspritzventile 7.

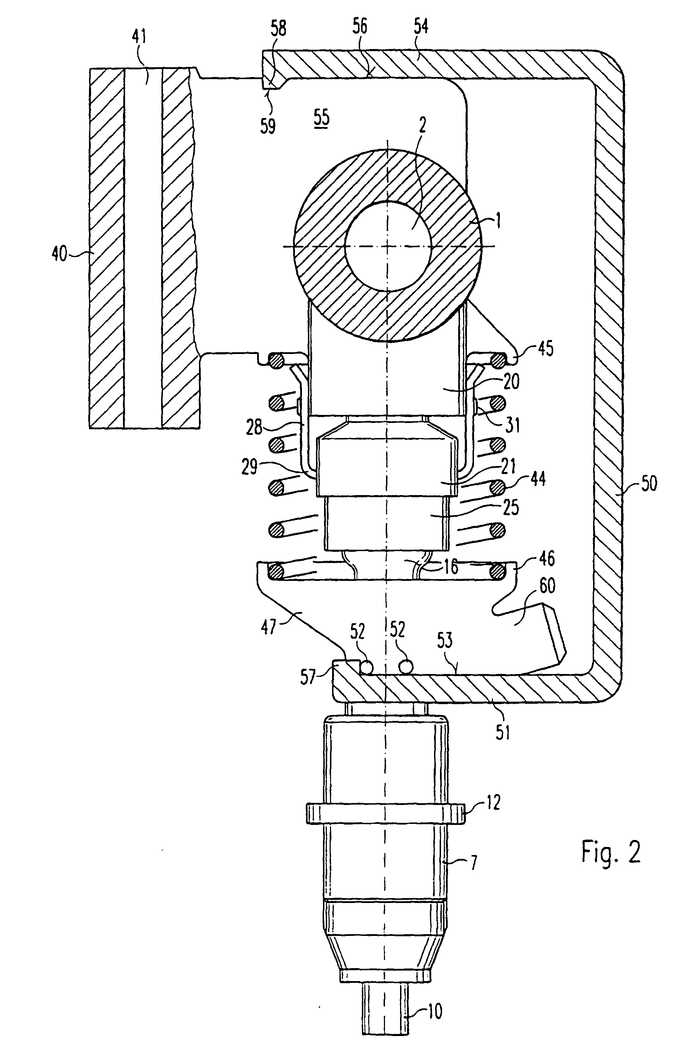

Die Brennstoff-Verteilerleitung 1 wird vorzugsweise mittels einer Schraubverbindung mit dem Zylinderkopf 9 verbunden. Im dargestellten Ausführungsbeispiel weist die Brennstoff-Verteilerleitung 1 einen versetzt zur Schnittebene der Fig. 1 angeordneten Haltestutzen 40 auf mit einer besser aus Fig. 2 zu ersehenden Längsbohrung 41. Durch die Längsbohrung 41 hindurch ragt im dargestellten Ausführungsbeispiel eine Schraube, von welcher in Fig. 1 lediglich der Schraubenkopf 42 zu erkennen ist. Durch diese Schraube wird eine Schraubverbindung mit einem Haltesockel 43 geschaffen, der mit dem Zylinderkopf 9 entweder einstückig ausgebildet ist oder mit diesem fest, zum Beispiel durch Verschweißen, verbunden ist. Vorzugsweise ist für jedes Brennstoffeinspritzventil 7 eine derartige Verschraubung vorgesehen.

Durch Anziehen der Verschraubung wird eine kraftschlüssige Verbindung zwischen der Brennstoff-Verteilerleitung 1 über die Zwischenhülse 21 mit dem Brennstoffeinspritzventil 7 geschaffen, so daß das Brennstoffeinspritzventil 7 in die Aufnahmebohrung 8 des Zylinderkopfes 9 eingedrückt wird. Während des Betriebs der Brennkraftmaschine wird das Brennstoffeinspritzventil 7 gegen den Verbrennungsdruck in dem zugeordneten Brennraum der Brennkraftmaschine mittels der kraftschlüssigen Verbindung niedergehalten, die durch den Haltesockel 43, den Haltestutzen 40, die Brennstoff-Verteilerleitung 1 und die Zwischenhülse 21 geschaffen wird. Zusätzliche Spannpratzen, wie sie bei der konventionellen Montage der Brennstoffeinspritzventile 7 an dem Zylinderkopf 9 Verwendung finden, werden nicht benötigt.

Vorzugsweise sind entlang der Brennstoff-Verteilerleitung 1 mehrere Haltestutzen 40 und Haltesockel 43 vorgesehen. Insbesondere kann jedem Brennstoffeinspritzventil 7 ein Haltesockel 43 und ein Haltestutzen 40 zugeordnet sein.

Aus Fig. 1 ist ferner ein Federelement 44 in Form einer Spiralfeder erkennbar, die Teil der noch näher zu beschreibenden erfindungsgemäßen Montagevorrichtung ist. Ein derartiges Federelement 44 ist für jedes Brennstoffeinspritzventil 7 vorgesehen. Das Federelement 44 erstreckt sich zwischen einer Federaufnahme 45 der Brennstoff-Verteilerleitung 1 und einer der Federaufnahme 45 gegenüberliegenden Federaufnahme 46 des Brennstoffeinspritzventiles 7. Die Federaufnahmen 45 und 46 sind im dargestellten Ausführungsbeispiel als ringförmige Halterungen ausgebildet, die den Verbindungsstutzen 20 der Brennstoff-Verteilerleitung 1 bzw. die Brennstoffleitung 18 des Brennstoffeinspritzventiles 7 tellerartig umschließen. Die Federaufnahmen 45 und 46 dienen als axiale und radiale Fixierung des Federelements 44. Das Federelement 44 wird vor dem Einsetzen des Zulaufabschnittes 16 des Brennstoffeinspritzventiles 7 in die Zwischenhülse 21 über die Zwischenhülse 21 geschoben. Das Federelement 44 umschließt daher im dargestellten Ausführungsbeispiel die Zwischenhülse 21, so daß sich eine besonders kompakte Ausführungsform ergibt. Bei einer Ausführungsform, bei welcher der Zulaufabschnitt 16 des Brennstoffeinspritzventils 7 unmittelbar in den Verbindungsstutzen 20 der Brennstoff-Verteilerleitung 1 eingesetzt wird, ist das Federelement 44 entweder kürzer auszubilden oder der Verbindungsstutzen 20 entsprechend zu verlängern.

Um eine wirkungsvolle Abstützung der durch das Federelement 44 aufgebrachten Federkraft zu bewirken, weist das Brennstoffeinspritzventil 7 einen konischen Abschnitt 47 auf, der eine sichere Abstützung der Federaufnahme 46 gewährleistet.

Die Funktionsweise der erfindungsgemäßen Montagevorrichtung wird nunmehr anhand von Fig. 2 beschrieben. Fig. 2 zeigt eine Seitenansicht des in Fig. 1 dargestellten Ausführungsbeispieles. Dargestellt ist jedoch im Gegensatz zu Fig. 1 nicht der endmontierte Zustand der Brennstoff-Verteilerleitung 1 und der Brennstoffeinspritzventile 7, sondern ein vormontierter Zustand, bei welchem die Brennstoffeinspritzventile 7 und die Zwischenhülsen 21 an der Brennstoff-Verteilerleitung 1 vormontiert sind. Dazu ist ein sämtlichen Brennstoffeinspritzventilen 7 gemeinsamer Montagebügel 50 vorgesehen. Im dargestellten Ausführungsbeispiel weist der Montagebügel 50 ein U-förmiges Querschnittsprofil auf. Der Montagebügel 50 kann sich als Profilkörper mit gleichbleibendem Querschnitt über die gesamte Brennstoff-Verteilerleitung 1 erstrecken. Es ist jedoch beispielsweise auch möglich, den Montagebügel in einer Rippenkonstruktion auszubilden und jedem der Brennstoffeinspritzventile 7 einen Aufnahmearm zuzuordnen. Auch vielfältige andere Ausführungsformen sind denkbar.

Ein erster Schenkel 51 des im dargestellten Ausführungsbeispiel U-förmig ausgebildeten Montagebügels 50 dient der Aufnahme der Brennstoffeinspritzventile 7. Die Brennstoffeinspritzventile 7 besitzen dazu eine im dargestellten Ausführungsbeispiel aus zwei angeformten Stiften bestehende Montagebügelaufnahme 52. Es sind jedoch auch anders ausgeformte Montagebügelaufnahmen 52, zum Beispiel in Form einer Lippe, eines schalenartigen Vorsprunges, eines Kragens oder dergleichen denkbar. Die Montagebügelaufnahme 52 liegt an der Innenfläche 53 des ersten Schenkels 51 des Montagebügels 50 bündig an und wird durch das Federelement 44 in Anlage gehalten bzw. angepreßt. Der erste Schenkel 51 des Montagebügels 50 ist im Bereich des Brennstoffeinspritzventiles 7 gabelartig aufgefächert, so daß er das Brennstoffeinspritzventil 7 beidseitig umfaßt, wobei auch an der in Fig. 2 verdeckten Seite des Brennstoffeinspritzventils 7 eine Montagebüselaufnahme 52 angeformt ist.

Ein zweiter, dem ersten Schenkel 51 gegenüberliegender Schenkel 54 des Montagebügels 50 dient der Anlage des Montagebügels 50 an einer Verstärkung 55 auf der den Brennstoffeinspritzventilen 7 abgelegenen Seite der Brennstoff-Verteilerleitung 1. Als Montagebügelaufnahme der Brennstoff-Verteilerleitung 1 dient dabei die Oberfläche 56 der Verstärkung 55. Der Montagebügel 50 erstreckt sich daher von der als Montagebügelaufnahme dienenden Oberfläche 56 der Verstärkung 55 der Brennstoff-Verteilerleitung 1 bis zu den Montagebügelaufnahmen 52 der Brennstoffeinspritzventile 7. Die Brennstoff-Verteilerleitung 1, die Zwischenhülsen 21 und die Brennstoffeinspritzventile 7 sind mittels der Federelemente 44 zwischen den beiden Schenkeln 51 und 54 des Montagebügels 50 eingespannt.

Die Vormontage erfolgt in der Weise, daß zunächst die Zwischenhülsen 21 in die Verbindungsstutzen 20 der Brennstoff-Verteilerleitung 1 eingesetzt werden und mittels der Sicherungselemente 28 an den Rastnasen 31 verankert werden. Nachfolgend werden die Federelemente 44 über die Zwischenhülsen 21 geschoben. Schließlich werden die Brennstoffeinspritzventile 7 in die Zwischenhülsen 21 eingesteckt. Abschließend wird der Montagebügel 50 montiert, in dem die Federelemente 44 leicht komprimiert werden, so daß die im Ausführungsbeispiel stiftartige Montagebügelaufnahme 52 über den Vorsprung 57 des ersten Schenkels 51 des Montagebügels 50 geführt werden kann. Der zweite Schenkel 54 weist ebenfalls einen Vorsprung 58 auf, der in eine Vertiefung 59 an der Oberfläche 56 der Verstärkung 55 eingreift. Auf diese Weise sind die Brennstoff-Verteilerleitung 1 und die Brennstoffeinspritzventile 7 an dem Montagebügel 50 sicher fixiert.

Das so vormontierte Modul der Brennstoff-Einspritzanlage kann nunmehr einer Vorprüfung unterzogen werden. Die Vorprüfung kann sich insbesondere auf eine Überprüfung der Dichtheit an sämtlichen abzudichtenden Übergängen beziehen. Ferner kann auch eine Funktionsprüfung durchgeführt werden. Dazu sind an den Steckern 60 der Brennstoffeinspritzventile 7 Buchsen mit Kabeln zur elektrischen Betätigung der Brennstoffeinspritzventile 7 aufzustecken. Durch elektrische Betätigung der Brennstoffeinspritzventile 7 kann überprüft werden, ob sämtliche Brennstoffeinspritzventile 7 ordnungsgemäß arbeiten.

Ein besonderer Vorteil besteht darin, daß das aus der Brennstoff-Verteilerleitung 1 und den Brennstoffeinspritzventilen 7 bestehende Modul in dem Werk des Herstellers der Brennstoff-Einspritzanlage vollständig vormontiert werden kann und als komplettes Modul dem Hersteller der Brennkraftmaschinen geliefert werden kann. Die dort notwendigen Endmontageschritte beschränken sich auf ein Einführen der Brennstoffeinspritzventile 7 in die Aufnahmebohrungen 8 des Zylinderkopfes 9 und das Herstellen der Schraubverbindung zwischen der Brennstoff-Verteilerleitung 1 und dem Zylinderkopf 9. Dazu sind Schrauben in die Längsbohrung 41 der Brennstoff-Verteilerleitung 1 einzuführen und in ein in dem Haltesockel 43 vorgesehenes Gewinde einzuschrauben. Dadurch werden die Brennstoff-Verteilerleitung 1, die Zwischenhülsen 21 und die Brennstoffeinspritzventile 7 in kraftschlüssige Anlage gebracht, so daß die Brennstoffeinspritzventile 7 in die Aufnahmebohrungen 8 des Zylinderkopfes 9 eingedrückt werden. Dabei werden die Federelemente 44 komprimiert bzw. weiter verspannt, so daß sich der Abstand zwischen den Montagebügelaufnahmen 52 der Brennstoffeinspritzventile 7 und der als Montagebügelaufnahme der Brennstoff-Verteilerleitung 1 dienenden Oberfläche 56 der Verstärkung 55 verringert. Im endmontierten Zustand der Brennstoff-Einspritzanlage kann daher der Montagebügel 50 gelöst und entfernt werden. Der Montagebügel 50 steht dann für die Vormontage einer neuen Brennstoff-Einspritzanlage zur Verfügung.

## Patentansprüche

1. Verfahren zum Montieren von Brennstoffeinspritzventilen (7) zum direkten Einspritzen von Brennstoff in einen Brennraum einer Brennkraftmaschine und einer Brennstoff-Verteilerleitung (1) an einem Zylinderkopf (9) der Brennkraftmaschine mit folgenden Verfahrensschritten:
- Aufschieben von Federelementen (44) in Federaufnahmen (45) der Brennstoff-Verteilerleitung (1) über Verbindungsstutzen (20) der Brennstoff-Verteilerleitung (1) hinweg,
- Einsetzen von Zulaufabschnitten (16) der Brennstoffeinspritzventile (7) in Austrittsöffnungen (19) der Verbindungsstutzen (20) der Brennstoff-Verteilerleitung (1), wobei sich die Federelemente (44) auf der der Brennstoff-Verteilerleitung (1) abgewandten Seite an Federaufnahmen (46) der zugeordneten Brennstoffeinspritzventile (7) abstützen,
- Zusammendrücken der Federelemente (44) zwischen den Federaufnahmen (46) der Brennstoffeinspritzventile (7) und den Federaufnahmen (45) der Brennstoff-Verteilerleitung (1) und Einsetzen dieser Einheit in einen Montagebügel (50), wobei sämtliche Brennstoffeinspritzventile (7) gemeinsam in Montagebügelaufnahmen (52) aufgenommen werden und der Montagebügel (50) an Montagebügelaufnahmen (56, 59) der Brennstoff-Verteilerleitung (1) gehalten wird,
- Montage dieser vormontierten Einheit an einem Zylinderkopf (9) durch Einführen von Abspritzabschnitten (10) der Brennstoffeinspritzventile (7) in zugeordnete Aufnahmebohrungen (8) des Zylinderkopfes (9) und Verbinden der Brennstoff-Verteilerleitung (1) mit dem Zylinderkopf (9),
- weiteres Zusammendrücken der Federelemente (44) und Entfernen des Montagebügels (50) durch Wegnahme des Montagebügels (50) von den Montagebügelaufnahmen (52) der Brennstoffeinspritzventile (7) und den Montagebügelaufnahmen (56, 59) der Brennstoff-Verteilerleitung (1).

2. Verfahren nach Anspruch 1, **dadurch gekennzeichnet, dass** vor dem Aufschieben der Federelemente (44) in die Federaufnahmen (45) der Brennstoff-Verteilerleitung (1) über Verbindungsstutzen (20) der Brennstoff-Verteilerleitung (1) hinweg Zwischenhülsen (21) als Verbindungselemente zwischen der Brennstoff-Verteilerleitung (1) und den Brennstoffeinspritzventilen (7) eingesetzt werden.

3. Verfahren nach Anspruch 2, **dadurch gekennzeichnet, dass** die Zwischenhülsen (21) in die Austrittsöffnungen (19) der Verbindungsstutzen (20) der Brennstoff-Verteilerleitung (1) eingesetzt werden, auf denen sie mittels Sicherungselementen (28) gesichert werden.

4. Verfahren nach Anspruch 3, **dadurch gekennzeichnet, dass** die Sicherungselemente (28) über Rastverbindungen (31, 32; 29, 30) mit der Brennstoff-Verteilerleitung (1) und/oder den Brennstoffeinspritzventilen (7) verbunden werden.

5. Verfahren nach einem der vorhergehenden Ansprüche, **dadurch gekennzeichnet, dass** die Brennstoff-Verteilerleitung (1) mit dem Zylinderkopf (9) durch Verschrauben verbunden wird, wodurch die Federelemente (44) so komprimiert werden, dass der Montagebügel (50) lösbar und entfernbar ist.

6. Montagevorrichtung zum Montieren von Brennstoffeinspritzventilen (7) zum direkten Einspritzen von Brennstoff in einen Brennraum einer Brennkraftmaschine und einer Brennstoff-Verteilerleitung (1) an einem Zylinderkopf (9) der Brennkraftmaschine zur Durchführung eines Verfahrens nach Anspruch 1, **dadurch gekennzeichnet, dass** die Montagevorrichtung als Montagebügel (50) mit einem U-förmigen Querschnittsprofil ausgeführt ist.

7. Montagevorrichtung nach Anspruch 6, **dadurch gekennzeichnet, dass** der Montagebügel (50) einen ersten und einen zweiten Schenkel (51, 54) aufweist, die an korrespondierenden Montagebügelaufnahmen (52) der Brennstoffeinspritzventile (7) und Montagebügelaufnahmen (56, 59) der Brennstoff-Verteilerleitung (1) angreifen.

8. Montagevorrichtung nach Anspruch 7, **dadurch gekennzeichnet, dass** der erste Schenkel (51) des Montagebügels (50) zur Umfassung der Brennstoffeinspritzventile (7) gabelartig aufgefächert ist.

9. Montagevorrichtung nach Anspruch 7 oder 8, **dadurch gekennzeichnet, dass** die beiden Schenkel (51, 54) an ihren Enden Vorsprünge (57, 58) aufweisen.

10. Montagevorrichtung nach Anspruch 6, **dadurch gekennzeichnet, dass** der Montagebügel (50) in einer Rippenkonstruktion ausgebildet ist, bei der jedem der Brennstoffeinspritzventile (7) ein Aufnahmearm zugeordnet ist.

## Claims

1. Method for the mounting of fuel injection valves (7) for the direct injection of fuel into a combustion space of an internal combustion engine and of a fuel distributor line (1) on a cylinder head (9) of the internal combustion engine, having the following method steps:
- pushing-on of spring elements (44) in spring receptacles (45) of the fuel distributor line (1) over connection pieces (20) of the fuel distributor line (1),
- insertion of inflow portions (16) of the fuel injection valves (7) into outlet orifices (19) of the connection pieces (20) of the fuel distributor line (1), the spring elements (44) being supported, on the side facing away from the fuel distributor line (1), on spring receptacles (46) of the associated fuel injection valves (7),
- compression of the spring elements (44) between the spring receptacles (46) of the fuel injection valves (7) and the spring receptacles (45) of the fuel distributor line (1) and the insertion of this unit into a mounting yoke (50), all the fuel injection valves (7) being received jointly in mounting-yoke receptacles (52), and the mounting yoke (50) being held on mounting-yoke receptacles (56, 59) of the fuel distributor line (1),
- mounting of this preassembled unit on a cylinder head (9) by the introduction of injection portions (10) of the fuel injection valves (7) into associated receiving bores (8) of the cylinder head (9) and connection of the fuel distributor line (1) to the cylinder head (9),
- further compression of the spring elements (44) and removal of the mounting yoke (50) by the mounting yoke (50) being taken away from the mounting-yoke receptacles (52) of the fuel injection valves (7) and the mounting-yoke receptacles (56, 59) of the fuel distributor line (1).

2. Method according to Claim 1, **characterized in that**, before the spring elements (44) are pushed on into the spring receptacles (45) of the fuel distributor line (1) over connection pieces (20) of the fuel distributor line (1), intermediate sleeves (21) are inserted as connecting elements between the fuel distributor line (1) and the fuel injection valves (7).

3. Method according to Claim 2, **characterized in that** the intermediate sleeves (21) are inserted into the outlet orifices (19) of the connection pieces (20) of the fuel distributor line (1), being secured on the said connection pieces by means of securing elements (28) .

4. Method according to Claim 3, **characterized in that** the securing elements (28) are connected to the fuel distributor line (1) and/or the fuel injection valves (7) via latching connections (31, 32; 29, 30).

5. Method according to one of the preceding claims, **characterized in that** the fuel distributor line (1) is connected to the cylinder head (9) by screwing, with the result that the spring elements (44) are compressed in such a way that the mounting yoke (50) is releasable and removable.

6. Mounting device for the mounting of fuel injection valves (7) for the direct injection of fuel into a combustion space of an internal combustion engine and of a fuel distributor line (1) on a cylinder head (9) of the internal combustion engine, for carrying out a method according to Claim 1, **characterized in that** the mounting device is designed as a mounting yoke (50) with a U-shaped cross-sectional profile.

7. Mounting device according to Claim 6, **characterized in that** the mounting yoke (50) has a first and a second leg (51, 54) which engage on corresponding mounting-yoke receptacles (52) of the fuel injection valves (7) and mounting-yoke receptacles (56, 59) of the fuel distributor line (1).

8. Mounting device according to Claim 7, **characterized in that** the first leg (51) of the mounting yoke (50) is fanned open in a fork-like manner in order to surround the fuel injection valves (7).

9. Mounting device according to Claim 7 or 8, **characterized in that** the two legs (51, 54) have projections (57, 58) at their ends.

10. Mounting device according to Claim 6, **characterized in that** the mounting yoke (50) is produced in a ribbed construction in which each of the fuel injection valves (7) is assigned a receiving arm.

## Revendications

1. Procédé de montage d'injecteur (7) pour l'injection directe de carburant dans la chambre de combustion d'un moteur à combustion interne et d'une conduite de distribution de carburant (1) sur une culasse (9) du moteur à combustion interne comprenant les étapes suivantes :
- on engage des ressorts (44) dans des logements de ressort (45) de la conduite distributrice de carburant (1) par-dessus les ajutages de liaison (20) de cette conduite distributrice (1),
- on met en place des segments d'alimentation (16) des injecteurs (7) dans les orifices de sortie (19) des ajutages de liaison (20) de la conduite distributrice (1), les ressorts (44) s'appuyant contre des logements de ressort (46) des injecteurs (7) associés, du côté opposé à celui de la conduite distributrice (1),
- on comprime les ressorts (44) entre les logements de ressort (46) des injecteurs (7) et les logements de ressort (45) de la conduite distributrice (1) et on place cet ensemble dans un étrier de montage (50), tous les injecteurs (7) étant placés en commun dans les logements (52) de l'étrier de montage et on tient l'étrier de montage (50) sur des moyens de réception (56, 59) de la conduite distributrice (1),
- on monte cet ensemble pré-assemblé sur la culasse (9) en introduisant des segments d'éjection (10) des injecteurs (7) dans des perçages de réception (8) correspondants de la culasse (9) et on relie la conduite de distribution (1) à la culasse (9),
- on continue à comprimer les ressorts (44) et on enlève l'arceau de montage (50) en le dégageant des moyens de réception (52) des injecteurs (7) et des moyens de réception (56, 59) de la conduite distributrice (1).

2. Procédé selon la revendication 1,
**caractérisé en ce qu'**
avant d'engager les ressorts (44) dans les logements à ressort (45) de la conduite distributrice (1) par-dessus les ajutages de liaison (20) de la conduite distributrice (1), on place des manchons intermédiaires (21) comme éléments de liaison entre la conduite distributrice (1) et les injecteurs de carburant (7).

3. Procédé selon la revendication 2,
**caractérisé en ce que**
les manchons intermédiaires (21) sont placés dans des orifices de réception (19) des ajutages de liaison (20) de la conduite distributrice (1), et ils sont fixés par des éléments de fixation (28).

4. Procédé selon la revendication 3,
**caractérisé en ce que**
les éléments de fixation (28) sont reliés par une liaison à encliquetage (31, 32 ; 29, 30) à la conduite distributrice (1) et/ou aux injecteurs (7).

5. Procédé selon l'une quelconque des revendications précédentes,
**caractérisé en ce que**
la conduite distributrice (1) est reliée par vissage à la culasse (9) et les ressorts (44) sont comprimés pour permettre de détacher et d'enlever l'étrier de montage (50).

6. Dispositif de montage pour installer des injecteurs de carburant (7) pour l'injection directe de carburant dans la chambre de combustion d'un moteur à combustion interne et d'une conduite distributrice de carburant (1) sur la culasse (9) du moteur à combustion interne, pour la mise en oeuvre du procédé selon la revendication 1,
**caractérisé en ce qu'**
on réalise le dispositif de montage comme étrier de montage (50) avec un profil à section en forme de U.

7. Dispositif de montage selon la revendication 6,
**caractérisé en ce que**
l'étrier de montage (50) comporte une première et une seconde branche (51, 54) s'appliquant contre des moyens de montage d'étrier (52) correspondants des injecteurs (7) et des moyens de montage d'étrier (56, 59) de la conduite distributrice de carburant (1).

8. Dispositif de montage selon la revendication 7,
**caractérisé en ce que**
la première branche (51) de l'étrier de montage (50) s'ouvre en éventail pour entourer les injecteurs (7).

9. Dispositif de montage selon l'une quelconque des revendications 7 ou 8,
**caractérisé en ce que**
les deux branches (51, 54) ont des parties en saillie (57, 58) à leurs extrémités.

10. Dispositif de montage selon la revendication 6,
**caractérisé en ce que**
l'étrier de montage (50) a une structure à nervures et à chaque injecteur (7) est associé un bras de réception.
